# EUROPÄISCHE PATENTSCHRIFT

(11) **EP 0 442 578 B1**
(45) Veröffentlichungstag und Bekanntmachung des Hinweises auf die Patenterteilung: **31.05.1995**
(21) Anmeldenummer: 91200289.6
(22) Anmeldetag: 12.02.1991
(51) Int. Cl.: H04N 5/44, H04N 5/445

(54) **Fernsehempfangsteil**
Television receiving section
Partie réception de télévision

(30) Priorität: 15.02.1990 DE 4004631
(43) Veröffentlichungstag der Anmeldung: 21.08.1991
(73) Patentinhaber: Philips Patentverwaltung GmbH, 22335 Hamburg (DE); Philips Electronics N.V., 5621 BA Eindhoven (NL)
(72) Erfinder: Ruprecht, Jürgen, W-2000 Oststeinbek (DE); Buchwald, Wolf-Peter, Dr., W-3305 Evessen/Hachum (DE)
(74) Vertreter: von Laue, Hanns-Ulrich, Dipl.-Ing.

(56) Entgegenhaltungen:
- FERNSEH- UND KINO-TECHNIK, 40. Jahrg., Nr. 3, 1986 Heidelberg WILHELM MÖRING "Konzepte der Taktverkoppelung für den digitalen Fernsehempfänger" Seiten 105-111
- FUNKSCHAU, Nr. 25, 1985, MUnchen "Digitale Fernsehgerüste: Anlauf zur Bildverbesserung" Seiten 53-56

## Beschreibung

Fernsehempfangsteil zum Empfang eines analogen, auf eine Trägerfrequenz aufmodulierten Fersehsignals, das mittels eines Mischers auf eine Zwischenfrequenzlage umgesetzt und nachfolgend in einem Zwischenfrequenz-Filter ausgefiltert wird, dem ein abtasttaktgesteuerter Analog/Digital-Umsetzer nachgeschaltet ist.

Aus der DE-OS 37 43 727 ist ein derartiges Fernsehempfangsteil bekannt, bei dem der Träger des empfangenen Fernsehsignals zunächst auf die übliche Zwischenfrequenz von 38,9 MHz umgesetzt wird. Das so umgesetzte Fernsehsignal tritt hinter der Zwischenfrequenzstufe etwa im Frequenzbereich von 33 bis 40 MHz auf. Dieses ZF-Signal wird dann einem Analog/Digital-Umsetzer zugeführt, der mit etwa 20 MHz getaktet wird. In einer dem Analog/Digital-Wandler nachgeschalteten Schaltungsanordnung wird das Ausgangssignal des Analog/Digital-Umsetzers demoduliert, so daß hinter dieser das digitale FBAS-Signal vorliegt.

Es ist Aufgabe der Erfindung, ein Fernsehempfangsteil der eingangs genannten Art weiter zu verbessern.

Diese Aufgabe wird erfindungsgemäß dadurch gelöst, daß die Zwischenfrequenz ein ganzzahliges Vielfaches der Frequenz des Abtasttaktes des Analog/Digital-Umsetzers beträgt, daß bei den dabei entstehenden Faltungen das Fernsehsignal auch in Basisbandlage auftritt und daß gleichzeitig mit der Abtastung des ZF-Fernsehsignals auch eine synchrone Demodulation stattfindet.

Der wesentliche Vorteil der Verkopplung der Zwischenfrequenz und der Abtasttaktfrequenz liegt darin, daß die Abtastung des auf die Zwischenfrequenzlage umgesetzten analogen Fernsehsignals bei Verkopplung der Zwischenfrequenz und der Frequenz des Abtasttaktes in der oben genannten Weise zur Folge hat, daß bei den dabei entstehenden Faltungen das Fernsehsignal auch in Basisbandlage auftritt. Es hat also gleichzeitig mit der Abtastung des ZF-Fernsehsignals auch eine Umsetzung des Signals in das Basisband und damit auch eine synchrone Demodulation stattgefunden. Hierdurch wird ein digitaler Demodulator, der beim Stand der Technik dem Analog/Digital-Umsetzer nachgeschaltet ist, eingespart. Der diesbezügliche Vorteil liegt nicht nur in der Einsparung des Demodulators, sondern auch darin, daß in einem solchen Demodulator leicht entstehende, unerwünschte Faltprodukte vermieden werden.

Durch die gleichzeitig mit der Abtastung entstehende Umsetzung in das Basisband ist das Fernsehsignal nicht mehr einer Trägerfrequenz aufmoduliert, so daß der Analog/Digital-Umsetzer eine geringere Auflösung aufweisen muß als bei den Lösungen nach dem Stande der Technik, bei denen ein etwa doppelter Pegel des auf eine Trägerfrequenz aufmodulierten Fernsehsignals berücksichtigt werden muß.

Bei einer Ausgestaltung der Erfindung ist vorgesehen, daß die Frequenz des Abtasttaktes 1/3 der Zwischenfrequenz beträgt. Bei dieser Wahl des Frequenzverhältnisses zwischen Zwischenfrequenz und Abtastfrequenz sind einerseits die bei der Abtastung infolge Faltung entstehenden Spektren noch genügend weit voneinander entfernt, um mit nicht zu großem Aufwand ausgefiltert werden zu können, während andererseits die Abtastfrequenz relativ niedrig ist, so daß der Aufwand bezüglich des Analog/Digital-Umsetzers klein gehalten wird.

Nach einer weiteren Ausgestaltung der Erfindung ist vorgesehen, daß eine hinter dem Analog/Digital-Umsetzer erfolgende Signalverarbeitung des digitalen Fernsehsignals mit einem Arbeitstakt erfolgt, dessen Frequenz gleich der des Arbeitstaktes des Analog/Digital-Umsetzers ist.

Vorteilhafterweise kann eine ggf. dem Analog/Digital-Umsetzer nachfolgende Signalverarbeitung mit dem gleichen Arbeitstakt erfolgen, mit dem auch die Abtastung des Fernsehsignals erfolgte. Es ist dann für die nachfolgende Signalverarbeitung und den Analog/Digital-Umsetzer nur ein Arbeitstakt erforderlich.

Soll das erfindungsgemäße Fernsehempfangsteil dagegen in vorgegebenen Fernseh-Chassis eingesetzt werden, deren digitale Stufen mit einer vorgegebenen Taktfrequenz arbeiten, so besteht nach einer weiteren Ausgestaltung der Erfindung die Möglichkeit, daß dem Analog/Digital-Umsetzer ein Taktratenumsetzer nachgeschaltet ist, mittels dessen für eine weitere nachfolgende Signalverarbeitung eine Taktratenwandlung auf einen anderen Arbeitstakt vorgenommen wird. Auf diese Weise ist eine Anpassung an beliebige Abtastfrequenzen der dem Analog/Digital-Umsetzer nachfolgenden Signalverarbeitung möglich.

Für alle Ausgestaltungen der Erfindung gilt, daß die Zwischenfrequenz und der Abtasttakt in dem gewählten Frequenzverhältnis phasenstarr miteinander verkoppelt sein müssen. Eine solche Verkopplung kann vorteilhafterweise, wie nach einer weiteren Ausgestaltung der Erfindung vorgesehen ist, dadurch vorgenommen werden, daß bei einem Fernsehempfangsteil mit einem Oszillator, dessen Ausgangssignal dem Mischer zugeführt wird, ein Phasendiskriminator vorgesehen ist, der die Frequenz des Abtasttaktes mit der entsprechend dem gewünschen Zahlen-Verhältnis zwischen Abtasttaktfrequenz und Zwischenfrequenz heruntergeteilten Zwischenfrequenz vergleicht und dessen Ausgangssignal die Frequenz des Oszillators so nachregelt, daß die Zwischenfrequenz und die Abtasttaktfrequenz in dem gewünschten Zahlenverhältnis zueinander stehen. Es wird also die Mischoszillatorfrequenz entsprechend der Taktfrequenz des Analog/Digital-Umsetzers nachgeführt. Auf diese Weise kann die gewünschte, phasenstarre Verkopplung der beiden Frequenzen gewährleisiet werden.

Nach einer weiteren Ausgestaltung der Erfindung ist vorgesehen, daß ein extern zugeführtes Basisband-Fernsehsignal alternativ zu dem empfangenen, auf die Zwischenfrequenz umgesetzten Fernsehsignal mittels des Analog/ Digital-Umsetzers in den digitalen Bereich umsetzbar ist.

Das erfindungsgemäße Fernsehempfangsteil bietet damit dan Vorteil, daß ohne jede Schaltungsänderung der Analog/Digital-Umsetzer des Fernsehempfangsteils auch dazu eingesetzt werden kann, von außen zugeführte Fernsehsignale, die sich im Basisband befinden, die also beispielsweise von einem Videorecorder stammen können, in den digitalen Bereich umzusetzen.

Für die Wahl der Zwischenfrequenz bzw. der Abtasttaktfrequenz bestehen bei allen Ausgestaltungen der Erfindung diverse Möglichkeiten, von denen je nach Randbedingung die geeignete gewählt werden kann. Liegt beispielsweise die Zwischenfrequenz fest bzw. soll weiterhin die übliche Zwischenfrequenz von 38,9 MHz gewählt werden, so wird der Abtasttakt entsprechend dem gewünschten Verhältnis festgelegt. In diesem Beispielsfalle würde, wenn die Frequenz des Abtasttaktes 1/3 der Zwischenfrequenz betragen soll, der Abtasttakt auf 12,97 MHz festgelegt. Darüber hinaus besteht auch die Möglichkeit, den Abtasttakt so festzulegen, daß er gleich einem Arbeitstakt einer dem Analog/Digital-Umsetzer nachfolgenden digitalen Signalverarbeitung ist. In diesem Falle wäre beispielsweise der Arbeitstakt mit 13,5 MHz festgelegt. Es könnte dann die Zwischenfrequenz in Abhängigkeit des Abtasttaktes auf beispielsweise den dreifachen Wert festgelegt werden, betrüge in diesem Falle also 40,5 MHz.

Liegt sowohl die Zwischenfrequenz fest, wie auch die Frequenz einer dem Analog/Digital-Wandler nachfolgenden digitalen Signalverarbeitung und stehen diese Frequenzen nicht in einem ganzzahligen Verhältnis zueinander, so kann in der oben beschriebenen Weise vorteilhafterweise dem Analog/Digital-Umsetzer ein Taktratenumsetzer zur Anpassung der Taktfrequenzen nachgeschaltet sein.

Anhand der Zeichnungen werden zwei Ausgestaltungen der Erfindung näher erläutert. Es zeigen:
- Fig. 1: ein Blockschaltbild eines Fernsehempfangsteils einer ersten Ausführungsform,
- Fig. 2: ein Spannungs/Frequenz-Diagramm zur Erläuterung des Fernsehempfangsteils gemäß Fig. 1 und
- Fig. 3: eine zweite Ausführungsform eines Fernsehempfangsteils.

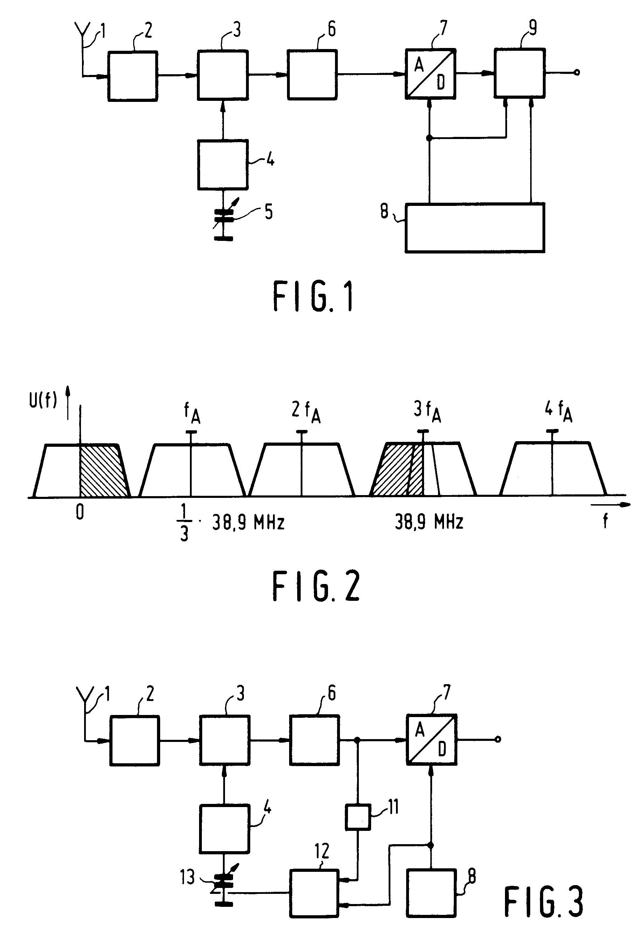

Ein in Fig. 1 in Form eines Blockschaltbildes dargestelltes Fernsehempfangsteil weist eine Eingangsstufe 2 auf, der ein von einer in der Fig. 1 nur schematisch dargestellten Antenne 1 stammendes Hochfrequenz-Fernsehsignalgemisch zugeführt wird. Die Vorstufe 2 dient dazu, einen ausgewählten Empfangsbereich auszufiltern. Der Vorstufe 2 ist ein Mischer 3 nachgeschaltet, dem außerdem das Signal eines Oszillators 4 zugeführt ist. Die Schwingfrequenz des Oszillators 4 ist auf einen gewünschten Wert einstellbar. Dazu ist in der Fig. 1 eine veränderbare Kapazität 5 angedeutet. Dem Mischer 3 ist ein analog arbeitendes ZF-Filter 6 nachgeschaltet. Das Ausgangssignal des ZF-Filters 6 ist einem Analog/Digital-Umsetzer 7 zugeführt. Dem Analog/Digital-Umsetzer 7 ist von einem Taktgenerator 8 ein Abtasttaktsignal einer gewünschten Frequenz zugeführt. Die Schwingfrequenz des Taktgenerators 8 ist mit der Schwingfrequenz des Oszillators in der Weise verkoppelt, daß die Zwischenfrequenz ein ganzzahliges Vielfaches der Frequenz des Taktgenerators 8, vorzugsweise das dreifache, beträgt. Dem Analog/Digital-Umsetzer 7 ist ein Interpolator 9 nachgeschaltet, mittels dessen die den Analog/Digital-Umsetzer 7 verlassenden digitalen Signale auf einen anderen Arbeitstakt umgesetzt werden. Dazu ist dem Interpolator 9 von dem Taktgeber 8 sowohl der Arbeitstakt des Analog/Digital-Umsetzers zugeführt, wie auch derjenige Arbeitstakt, auf den die digitalen Daten umgesetzt werden sollen.

Anhand des Diagramms gemäß Fig. 2 wird im folgenden die Funktionsweise des in Fig. 1 dargestellten Empfangsteils näher erläutert.

In dem Empfangsteil gemäß Fig. 1 wird mittels des Mischers 3 und des Oszillators 4 das empfangene analoge, einer hochfrequenten Trägerfrequenz aufmodulierte Fernsehsignal auf eine Zwischenfrequenz umgesetzt, die beispielsweise 38,9 MHz betragen kann. Das so auf die Zwischenfrequenzlage umgesetzte Fernsehsignal wird dann in dem Zwischenfrequenzfilter 6 ausgefiltert, d.h. von frequenzmäßig benachbarten Signalen befreit. Hinter dem Zwischenfrequenzfilter 6 liegt damit nur noch das auf Zwischenfrequenzlage umgesetzte Fernsehsignal vor. Dieses wird in dem Analog/Digital-Umsetzer 7 in den digitalen Bereich umgesetzt. Die sich dabei infolge der auftretenden Faltungen ergebenen Frequenzverhältnisse sind in Fig. 2 angedeutet. In dem Beispielsfalle wird davon ausgegangen, daß die Zwischenfrequenz 38,9 MHz beträgt und daß der Abtasttakt des Analog/Digital-Umsetzers 7 1/3 der Zwischenfrequenz beträgt, d.h. also 12,97 MHz. Die Darstellung gemäß Fig. 2 zeigt das in Zwischenfrequenzlage umgesetzte Fernsehsignal in Form eines schraffierten Trapezes. Infolge der Abtastung dieses Fernsehsignals in dem Analog/Digital-Umsetzer 7 entstehen verschiedene Faltprodukte, so daß das Fernsehsignal in verschiedenen Frequenzbereichen wiederholt auftritt. Bei jedem Vielfachen der Abtastfrequenz tritt das Fernsehsignal jeweils zweimal spiegelbildlich um die Vielfachen der Abtastfrequenz herum auf, wobei die Signale jeweils mit der früheren Zwischenfrequenzlage auf dem Vielfachen der Abtastfrequenz liegen. Darüber hinaus tritt das Fernsehsignal jedoch auch im Basisband auf, d.h. es tritt ein Faltprodukt auf, das mit der früheren Zwischenfrequenzlage genau auf der Frequenz Null liegt. Es hat damit zusammen mit der Abtastung und der dabei auftretenden Faltung gleichzeitig eine Demodulation des auf die Zwischenfrequenz umgesetzten Fernsehsignals stattgefunden. Dieses Signal ist in der Fig. 2 ebenfalls schraffiert dargestellt.

Damit liegt hinter dem Analog/Digital-Umsetzer 7 das Fernsehsignal bereits in digitalisierter und in in das Basisband umgesetzter Form vor, so daß ein digitaler Demodulator entfallen kann. Dieses Ausgangssignal des Umsetzers 7 kann in einer nachfolgenden digitalen Signalverarbeitung direkt weiterverarbeitet werden, wenn diese mit dem gleichen Arbeitstakt arbeitet wie der Umsetzer 7. Ist dies nicht der Fall, so kann der in Fig. 1 dargestellte Interpolator 9 vorgesehen sein, der das digitale Signal auf einen anderen Arbeitstakt umsetzt.

In Fig. 3 ist eine zweite Ausführungsform des erfindungsgemäßen Fernsehempfangsteils dargestellt, bei dem von einem bestimmten vorgegebenen Abtasttakt des Analog/Digital-Umsetzers ausgegangen wird, und Vorkehrungen getroffen sind, die Zwischenfrequenz und den Abtasttakt auf das gewünschte Zahlenverhältnis einzustellen.

Das Fernsehempfangsteil gemäß Fig. 3 weist in gleicher Weise wie das in Fig. 1 dargestellte Fernsehempfangsteil eine Vorstufe 2, einen Mischer 3, einen Oszillator 4, ein analoges Zwischenfrequenzfilter 6, einen Analog/Digital-Umsetzer 7 sowie einen Taktgeber 8 auf.

Der Taktgeber 8 kann beispielsweise eine Taktfrequenz von 13,5 MHz liefern, mit der in dem Analog/Digital-Umsetzer 7 die Abtastung des von dem ZF-Filter gelieferten, in Zwischenfrequenzlage umgesetzten empfangenen Fernsehsignals vorgenommen wird. Die Frequenz des Oszillators 4 soll nun so eingestellt werden, daß die Zwischenfrequenz genau das Dreifache des von dem Taktgenerator 8 gelieferten Arbeitstaktes beträgt. Dazu wird die Zwischenfrequenz am Ausgang des analogen ZF-Filters 6 einem Teiler 11 zugeführt, dessen Ausgangssignal wiederum einem Phasendiskriminator 12 zugeführt wird. Dem Phasendiskriminator 12 ist außerdem der von dem Taktgenerator 8 gelieferte Arbeitstakt zugeführt. Soll beispielsweise die Zwischenfrequenz das Dreifache der Frequenz des von dem Taktgenerator 8 gelieferten Abtasttaktes betragen, so wird in der Teilerschaltung 11 die Zwischenfrequenz durch drei geteilt. Wenn die Zwischenfrequenz und die Frequenz des Abtasttaktes das gewünschte Verhältnis aufweisen, müßten somit die beiden Eingangssignale des Phasendiskriminators 12 gleiche Frequenz und auch gleiche Phasenlage aufweisen. Ist dies nicht der Fall, so liefert der Phasendiskriminator 12 ein entsprechendes Korrektursignal, das der Nachsteuerung der Frequenz des Oszillators 4 dient. In der Fig. 3 ist dies schematisch dadurch angedeutet, daß der Phasendiskriminator 12 auf eine veränderbare Kapazität 13 einwirkt, deren Kapazitätsänderung die Frequenz des Oszillators 4 verändert. In Abhängigkeit der Frequenzverhältnisse der heruntergeteilten Zwischenfrequenz und der Frequenz des Abtasttaktes wird also von dem Phasendiskriminator ein Korrektursignal geliefert, welches die Frequenz des Oszillators 4 so nachsteuert, daß das gewünschte Frequenzverhältnis jederzeit gewährleistet ist.

## Patentansprüche

1. Fernsehempfangsteil zum Empfang eines analogen, auf eine Trägerfrequenz aufmodulierten Fernsehsignals, das mittels eines Mischers (3) auf eine Zwischenfrequenzlage umgesetzt und nachfolgend in einem Zwischenfrequenz-Filter (6) ausgefiltert wird, dem ein abtasttaktgesteuerter Analog/Digital-Umsetzer (7) nachgeschaltet ist, dadurch gekennzeichnet, daß die Zwischenfrequenz ein ganzzahliges Vielfaches der Frequenz des Abtasttaktes des Analog/Digital-Umsetzers (7) beträgt, daß bei den dabei entstehenden Faltungen das Fernsehsignal auch in Basisbandlage auftritt und daß gleichzeitig mit der Abtastung des ZF-Fernsehsignals auch eine synchrone Demodulation stattfindet.

2. Fernsehempfangsteil nach Anspruch 1, dadurch gekennzeichnet, daß die Frequenz des Abtasttaktes 1/3 der Zwischenfrequenz beträgt.

3. Fernsehempfangsteil nach Anspruch 1 oder 2, dadurch gekennzeichnet, daß eine hinter dem Analog/Digital-Umsetzer (7) erfolgende Signalverarbeitung des digitalen Fernsehsignals mit einem Arbeitstakt erfolgt, dessen Frequenz gleich der des Arbeitstaktes des Analog/Digital-Umsetzers (7) ist.

4. Fernsehempfangsteil nach Anspruch 1 oder 2, dadurch gekennzeichnet, daß dem Analog/Digital-Umsetzer (7) ein Taktratenumsetzer (9) nachgeschaltet ist, mittels dessen für eine nachfolgende Signalverarbeitung eine Taktratenwandlung auf einen anderen Arbeitstakt vorgenommen wird.

5. Fernsehempfangsteil nach einem der Ansprüche 1 bis 4 mit einem Oszillator (4), dessen Ausgangssignal dem Mischer (3) zugeführt wird,
dadurch gekennzeichnet, daß ein Phasendiskriminator (12) vorgesehen ist, der die Frequenz des Abtasttaktes mit der entsprechend dem gewünschten Zahlenverhältnis zwischen Abtasttaktfrequenz und Zwischenfrequenz heruntergeteilten Zwischenfrequenz vergleicht und dessen Ausgangssignal die Frequenz des Oszillators (3) so nachregelt, daß die Zwischenfrequenz und die Abtasttaktfrequenz in dem gewünschten Zahlenverhältnis zueinander stehen.

6. Fernsehempfangsteil nach einem der vorhergehenden Ansprüche, dadurch gekennzeichnet, daß ein extern zugeführtes Basisband-Fernsehsignal alternativ zu dem empfangenen, auf die Zwischenfrequenz umgesetzten Fernsehsignal mittels des Analog/Digital-Umsetzers (7) in den digitalen Bereich umsetzbar ist.

## Claims

1. A television receiving section for receiving an analog television signal modulated on a carrier frequency, which signal is converted to an intermediate frequency by means of a mixer (3) and is subsequently selected in an intermediate frequency filter (6) which is succeeded by a sample clock-controlled A/D converter (7), characterized in that the intermediate frequency is an integral multiple of the sample clock frequency of the A/D converter (7), in that at the aliasings then produced, the television signal also occurs in the baseband position, and in that a synchronous demodulation also occurs simultaneously with the sampling of the IF television signal.

2. A television receiving section as claimed in Claim 1, characterized in that the frequency of the sample clock is 1/3 of the intermediate frequency.

3. A television receiving section as claimed in Claim 1 or 2, characterized in that a signal processing operation of the digital television signal subsequent to the A/D converter (7) is effected with an operating clock whose frequency is equal to the operating clock of the A/D converter (7).

4. A television receiving section as claimed in Claim 1 or 2, characterized in that the A/D converter (7) is succeeded by a clock rate converter (9) by means of which the clock rate is converted to a different operating clock for a subsequent signal processing operation.

5. A television receiving section as claimed in any one of Claims 1 to 4, including an oscillator (4) whose output signal is applied to the mixer (3), characterized in that a phase discriminator (12) is provided which compares the sample clock frequency with the intermediate frequency which is divided in conformity with the desired numerical ratio between the sample clock frequency and the intermediate frequency, the output signal of said discriminator correcting the frequency of the oscillator (3) in such a way that the intermediate frequency and the sample clock frequency have the desired numerical ratio with respect to each other.

6. A television receiving section as claimed in any one of the preceding Claims, characterized in that alternatively to the received television signal converted to the intermediate frequency an externally applied baseband television signal can be converted to the digital range by means of the A/D converter (7).

## Revendications

1. Partie réceptrice de télévision destinée à recevoir un signal de télévision analogique modulé sur une fréquence porteuse, qui est converti à l'aide d'un mélangeur (3) à une fréquence intermédiaire et est ensuite filtré dans un filtre de fréquence intermédiaire (6), en aval duquel est connecté un convertisseur analogique/numérique (7) commandé en cadence d'échantillonnage, caractérisée en ce que la fréquence intermédiaire est un multiple entier de la fréquence de la cadence d'échantillonnage du convertisseur analogique/numérique (7), que dans les convolutions qui apparaissent, le signal de télévision apparaît également dans la bande de base et que, simultanément avec l'échantillonnage du signal de télévision de fréquence intermédiaire, une démodulation synchrone se produit également.

2. Partie réceptrice de télévision selon la revendication 1, caractérisée en ce que la fréquence de la cadence d'échantillonnage est égale à un tiers de la fréquence intermédiaire.

3. Partie réceptrice de télévision selon la revendication 1 ou 2, caractérisée en ce qu'un traitement du signal de télévision numérique est effectué derrière le convertisseur analogique/numérique (7) avec une cadence de travail dont la fréquence est égale à celle de la cadence de travail du convertisseur analogique/numérique (7).

4. Partie réceptrice de télévision selon la revendication 1 ou 2, caractérisée en ce qu'en aval du convertisseur analogique/numérique (7) est connecté un convertisseur de taux de cadence (9) à l'aide duquel on effectue une conversion du taux de cadence à une autre cadence de travail pour un traitement ultérieur des signaux.

5. Partie réceptrice de télévision selon l'une quelconque des revendications 1 à 4, comportant un oscillateur (4) dont le signal de sortie est acheminé au mélangeur (3), caractérisée en ce qu'il est prévu un discriminateur de phase (12) qui compare la fréquence de la cadence d'échantillonnage à la fréquence intermédiaire réduite selon le rapport numérique souhaité entre la fréquence de la cadence d'échantillonnage et la fréquence intermédiaire et dont le signal de sortie réajuste la fréquence de l'oscillateur (3), de telle sorte que la fréquence intermédiaire et la fréquence de la cadence d'échantillonnage soient dans le rapport numérique mutuel souhaité.

6. Partie réceptrice de télévision selon l'une quelconque des revendications précédentes, caractérisée en ce qu'un signal de télévision en bande de base acheminé de l'extérieur alternativement au signal de télévision reçu converti à la fréquence intermédiaire peut être converti à l'aide du convertisseur analogique/numérique (7) dans le domaine numérique.
